# EUROPEAN PATENT APPLICATION

(11) **EP 4 801 078 A1**
(43) Date of publication of application: **02.09.2026**
(21) Application number: 24884327.8
(22) Date of filing: 27.09.2024
(51) Int. Cl.: H04W 4/48

(54) **COMMUNICATION CONNECTION METHOD, VEHICLE-MOUNTED DEVICE, AND RELATED MEDIUM**

(30) Priority: 30.10.2023 CN 202311434912
(71) Applicant: BYD Company Limited, Shenzhen, Guangdong 518118 (CN)
(72) Inventor: TAN, Kai, Shenzhen, Guangdong 518118 (CN); YANG, Dongsheng, Shenzhen, Guangdong 518118 (CN); SU, Kai, Shenzhen, Guangdong 518118 (CN); SUN, Xiaoqi, Shenzhen, Guangdong 518118 (CN); ZHENG, Wei, Shenzhen, Guangdong 518118 (CN)
(74) Representative: Venner Shipley LLP
(86) International application number: PCT/CN2024/121722
(87) International publication number: WO 2025/092322

(57) **Abstract**

Disclosed are a communication connection method, a vehicle-mounted device, and a related medium. The method may be applied to a first vehicle-mounted device, and the first vehicle-mounted device is a vehicle-mounted device that provides a wireless communication hotspot service. The method may include: The first vehicle-mounted device receives a wireless connection request from a second vehicle-mounted device; and the first vehicle-mounted device allows, when the wireless connection request includes a preset device identifier and the preset device identifier matches a device identifier of the first vehicle-mounted device, the second vehicle-mounted device to establish a wireless connection.

## Description

This application claims priority to Chinese Patent Application No. 202311434912.5, filed with the China National Intellectual Property Administration on October 30, 2023 and entitled "COMMUNICATION CONNECTION METHOD, VEHICLE-MOUNTED DEVICE, AND RELATED MEDIUM", which is incorporated herein by reference in its entirety.

### TECHNICAL FIELD

This application relates to the field of communication technologies, and in particular, to a communication connection method, a vehicle-mounted device, and a related medium.

### BACKGROUND

With popularity of intelligent networking technologies in vehicle-mounted devices, more automotive enterprises use wireless fidelity (wireless fidelity, Wi-Fi) networking to implement network connections between vehicle-mounted devices and/or network connections between vehicle-mounted devices and other mobile terminals. Usually, a Wi-Fi hotspot is activated by a front-row device in a vehicle through a wireless SoftAP (SoftAP), while other vehicle-mounted devices (such as a front passenger display device, a rear-row display device, and an armrest display device) and/or mobile terminals are connected to the SoftAP hotspot of the front-row device by using a Wi-Fi user name and password, thereby implementing wireless communication between the devices in this manner. However, when there are surrounding hotspots that share a same name and password as the SoftAP hotspot of the front-row device, the other vehicle-mounted devices may mistakenly connect to those hotspots. This results in excessively low data connection security and may lead to undesirable consequences such as user data leakage.

Therefore, how to provide a method for improving wireless connection accuracy for a user is an urgent problem to be resolved by a person skilled in the art.

### SUMMARY

According to a first aspect, an embodiment of this application provides a communication connection method, performed by a first vehicle-mounted device. The method may include:
The first vehicle-mounted device receives a wireless connection request from a second vehicle-mounted device; and
the first vehicle-mounted device allows, when the wireless connection request includes a preset device identifier and the preset device identifier matches a device identifier of the first vehicle-mounted device, the second vehicle-mounted device to establish a wireless connection.

In a possible implementation, before the first vehicle-mounted device receives the wireless connection request from the second vehicle-mounted device, the method may further include:
The first vehicle-mounted device establishes a wired connection to the second vehicle-mounted device; and
the first vehicle-mounted device sends first information to the second vehicle-mounted device through the wired connection, where the first information may be used by the second vehicle-mounted device to establish the wireless connection to the first vehicle-mounted device based on the first information.

In another possible implementation, the first information may include a user name and a password of the wireless communication hotspot service, and the device identifier of the first vehicle-mounted device.

In another possible implementation, the method may further include:
When the wireless connection request does not include the preset device identifier, and/or the preset device identifier does not match the device identifier of the first vehicle-mounted device, the first vehicle-mounted device rejects the wireless connection request from the second vehicle-mounted device.

In another possible implementation, the method may further include:
The first vehicle-mounted device receives, through the wired connection, second information sent by the second vehicle-mounted device, where the second information may include a device identifier of the second vehicle-mounted device.

In another possible implementation, after the first vehicle-mounted device allows, when the wireless connection request includes the preset device identifier and the preset device identifier matches the device identifier of the first vehicle-mounted device, the second vehicle-mounted device to establish the wireless connection, the method may further include:
The first vehicle-mounted device hides information about the second vehicle-mounted device when displaying a device connection list of the hotspot service.

In another possible implementation, the hiding information about the second vehicle-mounted device may include:
hiding the information about the second vehicle-mounted device when the second information matches third information, where
the third information is information sent by the second vehicle-mounted device and received by the first vehicle-mounted device through the wireless connection, and the third information may include the device identifier of the second vehicle-mounted device.

In another possible implementation, the method may further include:
maintaining the wireless connection between the first vehicle-mounted device and the second vehicle-mounted device in response to a request to disable a hotspot service for the first vehicle-mounted device.

In another possible implementation, the method may further include:

The first vehicle-mounted device hides an SSID broadcast of the first vehicle-mounted device.

According to a second aspect, an embodiment of this application provides a communication connection method, performed by a second vehicle-mounted device. The method may include:

The second vehicle-mounted device sends a wireless connection request to a first vehicle-mounted device, where the first vehicle-mounted device is a vehicle-mounted device that provides a wireless communication hotspot service; and
the second vehicle-mounted device establishes a wireless connection to the first vehicle-mounted device based on the wireless connection request when the wireless connection request includes a preset device identifier and the preset device identifier matches a device identifier of the first vehicle-mounted device.

In a possible implementation, before the second vehicle-mounted device sends the wireless connection request to the first vehicle-mounted device, the method may further include:

The second vehicle-mounted device establishes a wired connection to the first vehicle-mounted device; and
the second vehicle-mounted device receives first information sent by the first vehicle-mounted device through the wired connection, where the first information may be used by the second vehicle-mounted device to establish the wireless connection to the first vehicle-mounted device based on the first information.

In another possible implementation, the first information may include a user name and a password of the wireless communication hotspot service, and the device identifier of the first vehicle-mounted device.

In another possible implementation, the method may further include:

The second vehicle-mounted device sends second information to the first vehicle-mounted device through the wired connection, where the second information may include a device identifier of the second vehicle-mounted device; and
the second vehicle-mounted device sends third information to the first vehicle-mounted device through the wireless connection, where the third information may include the device identifier of the second vehicle-mounted device, so that when the first vehicle-mounted device displays a device connection list of the wireless communication hotspot service based on the second information and the third information, the first vehicle-mounted device hides or displays information about the second vehicle-mounted device.

According to a third aspect, an embodiment of this application provides a vehicle-mounted device. The vehicle-mounted device may include a processor, a memory, and an I/O interface. The processor, the memory, and the I/O interface are communicatively connected. The memory is configured to store a set of program code. The processor is configured to invoke the program code stored in the memory, to perform the method according to the first aspect.

According to a fourth aspect, an embodiment of this application provides a non-volatile computer-readable storage medium.

The non-volatile computer-readable storage medium stores instructions, and when the instructions are run on a computer, the method according to the first aspect is implemented.

According to a fifth aspect, an embodiment of this application provides a vehicle-mounted device. The vehicle-mounted device may include a processor, a memory, and an I/O interface. The processor, the memory, and the I/O interface are communicatively connected. The memory is configured to store a set of program code. The processor is configured to invoke the program code stored in the memory, to perform the method according to the second aspect.

According to a sixth aspect, an embodiment of this application provides a non-volatile computer-readable storage medium.

The non-volatile computer-readable storage medium stores instructions, and when the instructions are run on a computer, the method according to the second aspect is implemented.

According to a seventh aspect, an embodiment of this application provides a vehicle. The vehicle may include the vehicle-mounted device according to the third aspect or the non-volatile computer-readable storage medium according to the fourth aspect, and the vehicle-mounted device according to the fifth aspect or the non-volatile computer-readable storage medium according to the sixth aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show some embodiments of this application, and a person of ordinary skill in the art can derive other drawings from these accompanying drawings without creative efforts.
FIG. 1 is a schematic flowchart of a communication connection method according to an embodiment of this application;
FIG. 2 is a diagram of a scenario in which a second vehicle-mounted device generates a wireless connection request according to an embodiment of this application;
FIG. 3 is a schematic flowchart in which a first vehicle-mounted device processes a wireless connection request according to an embodiment of this application;
FIG. 4 is a schematic flowchart of updating a connected list according to an embodiment of this application;
FIG. 5 is a diagram of another scenario of updating a connected list according to an embodiment of this application;
FIG. 6 is a schematic flowchart in which a first vehicle-mounted device disables a wireless communication hotspot service according to an embodiment of this application;
FIG. 7 is a composition diagram of a vehicle-mounted device according to an embodiment of this application; and
FIG. 8 is a composition diagram of another vehicle-mounted device according to an embodiment of this application.

### Reference numerals:

50: head unit display; 700: vehicle-mounted device; 710: communication module; 720: control module; 800: vehicle-mounted device; 810: processor; 820: memory; 821: storage system; 822: cache; 823: RAM; 830: I/O interface.

### DETAILED DESCRIPTION OF PREFERRED EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that embodiments described in this specification may be combined with another embodiment.

An objective of this application is to provide a communication connection method, a vehicle-mounted device, and a related medium that can connect a hotspot device with a specific media access control MAC addresses (namely, a device that provides a wireless communication hotspot service). This helps prevent occurrence of user data leakage caused by connecting to another hotspot (or another wireless communication hotspot service) with a same username and password, and helps protect user data.

It can be learned that in this application, a hotspot device (namely, the device that provides the wireless communication hotspot service) is allowed to compare a target MAC address (namely, a MAC address of a hotspot device to which the device wants to establish a wireless connection) in a wireless connection request with a MAC address of a current hotspot device, to avoid a case in which the device is mistakenly connected to a hotspot (or another wireless communication hotspot service), thereby improving accuracy of the wireless connection, and protecting security of the user data.

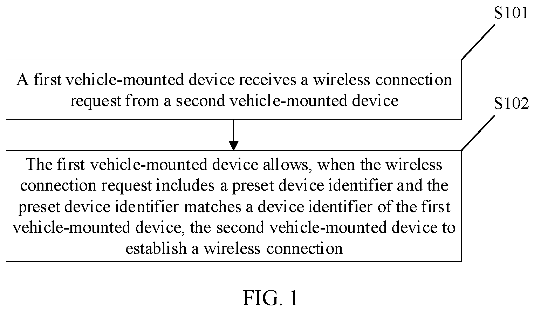

To better understand the technical solutions in embodiments of this application, the following describes in detail a communication connection method provided in an embodiment of this application with reference to FIG. 1.

FIG. 1 is a schematic flowchart of a communication connection method according to an embodiment of this application. The method may include the following steps.

S101: A first vehicle-mounted device receives a wireless connection request from a second vehicle-mounted device.

It should be noted that the wireless connection request sent by the second vehicle-mounted device includes at least a user name, a password, and an encryption manner of a wireless communication hotspot service to which the second vehicle-mounted device is expected to connect.

In a possible implementation, before the first vehicle-mounted device receives the wireless connection request from the second vehicle-mounted device, the method may further include:

The first vehicle-mounted device establishes a wired connection to the second vehicle-mounted device; and
the first vehicle-mounted device sends first information to the second vehicle-mounted device through the wired connection, where the first information may be used by the second vehicle-mounted device to establish the wireless connection to the first vehicle-mounted device based on the first information.

In another possible implementation, the first information may include a user name and a password of the wireless communication hotspot service, and the device identifier of the first vehicle-mounted device.

A specific representation form of the device identifier may be a MAC address of a vehicle-mounted device.

In another possible implementation, the method may further include:

The first vehicle-mounted device receives, through the wired connection, second information sent by the second vehicle-mounted device, where the second information may include a device identifier of the second vehicle-mounted device.

Further, the first vehicle-mounted device may establish a vehicle-mounted device list, and the vehicle-mounted device list may include MAC addresses of vehicle-mounted devices that have a wired connection to the first vehicle-mounted device.

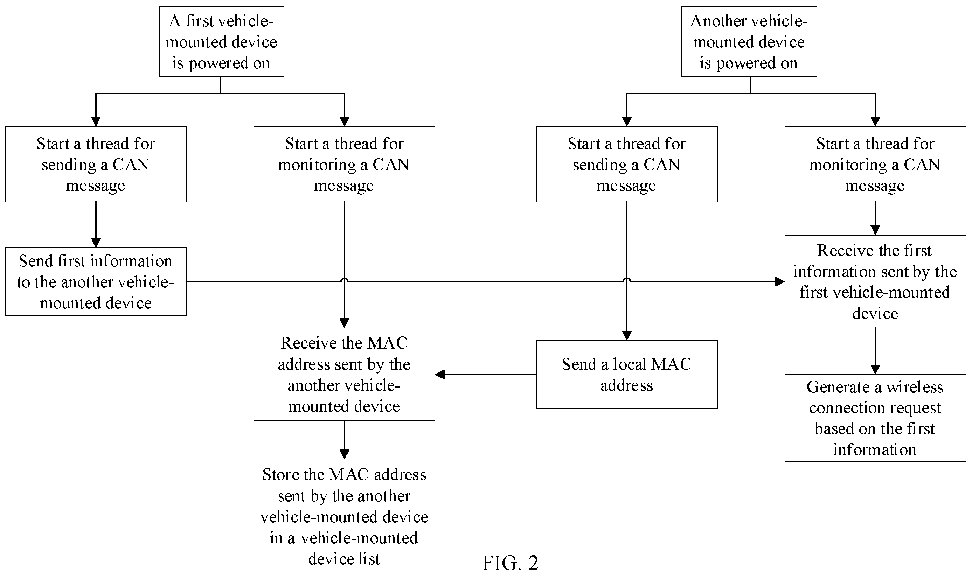

For example, FIG. 2 is a diagram of a scenario in which a second vehicle-mounted device generates a wireless connection request according to an embodiment of this application.

As shown in FIG. 2, in response to starting of a vehicle and powering on of vehicle-mounted devices (including the first vehicle-mounted device and other vehicle-mounted devices) in the vehicle, the first vehicle-mounted device sends first information to the other vehicle-mounted devices in a same vehicle (which may be understood as the second vehicle-mounted device in this application) through a CAN bus, where the first information may include a user name, a password, an encryption manner of a wireless communication hotspot service provided by the first vehicle-mounted device, and the device identifier of the first vehicle-mounted device (for example, a MAC address of the first vehicle-mounted device); and the first vehicle-mounted device further monitors whether there are MAC addresses transmitted by the other vehicle-mounted devices on the CAN bus. When the first vehicle-mounted device receives MAC address information sent by the other vehicle-mounted devices, the first vehicle-mounted device stores the MAC addresses in the vehicle-mounted device list. After being powered on, the other vehicle-mounted devices located in the same vehicle as the first vehicle-mounted device also send the local MAC addresses to the first vehicle-mounted device through the CAN bus. The other vehicle-mounted devices may further monitor and receive the first information sent by the first vehicle-mounted device on the CAN bus, and then generate wireless connection requests based on the first information. The other vehicle-mounted devices specify target devices by including preset device identifiers in the wireless connection requests, and the target devices are devices to which the other vehicle-mounted devices want to establish wireless connections.

It can be learned that, vehicle-mounted devices in this embodiment of this application exchange MAC addresses in a wired manner (for example, the CAN bus). This helps subsequently establish reliable and accurate wireless connections based on the MAC addresses, thereby preventing mistakenly connecting to a wireless network and protecting data security.

S102: The first vehicle-mounted device allows, when the wireless connection request includes a preset device identifier and the preset device identifier matches a device identifier of the first vehicle-mounted device, the second vehicle-mounted device to establish a wireless connection.

For example, assuming that the first vehicle-mounted device receives two wireless connection requests (a wireless connection request 1 includes a preset device identifier 1, and a wireless connection request 2 does not include a preset device identifier 2), it may be considered that the wireless connection request 1 is sent by a vehicle-mounted device, and the wireless connection request 2 is sent by a user-controlled mobile terminal. To determine whether to allow a vehicle-mounted device corresponding to the wireless connection request 1 to establish a wireless connection, the first vehicle-mounted device needs to determine whether the preset device identifier 1 included in the wireless connection request 1 matches the device identifier of the first vehicle-mounted device. To determine whether to allow a mobile terminal corresponding to the wireless connection request 2 to establish a wireless connection, the first vehicle-mounted device only needs to determine whether a target user name, a password, and an encryption manner that are carried in the wireless connection request 2 are the same as the user name, the password, and the encryption manner of the wireless communication hotspot service provided by the first vehicle-mounted device.

In a possible implementation, the method may further include:
When the wireless connection request does not include the preset device identifier, and/or the preset device identifier does not match the device identifier of the first vehicle-mounted device, the first vehicle-mounted device rejects the wireless connection request from the second vehicle-mounted device.

In another possible implementation, the method may further include:
The first vehicle-mounted device receives, through the wired connection, second information sent by the second vehicle-mounted device, where the second information may include a device identifier of the second vehicle-mounted device.

In another possible implementation, after the first vehicle-mounted device allows, when the wireless connection request includes the preset device identifier and the preset device identifier matches the device identifier of the first vehicle-mounted device, the second vehicle-mounted device to establish the wireless connection, the method may further include:
The first vehicle-mounted device hides information about the second vehicle-mounted device when displaying a device connection list of the hotspot service.

In another possible implementation, the hiding information about the second vehicle-mounted device may include:
hiding the information about the second vehicle-mounted device when the second information matches third information, where
the third information is information sent by the second vehicle-mounted device and received by the first vehicle-mounted device through the wireless connection, and the third information may include the device identifier of the second vehicle-mounted device.

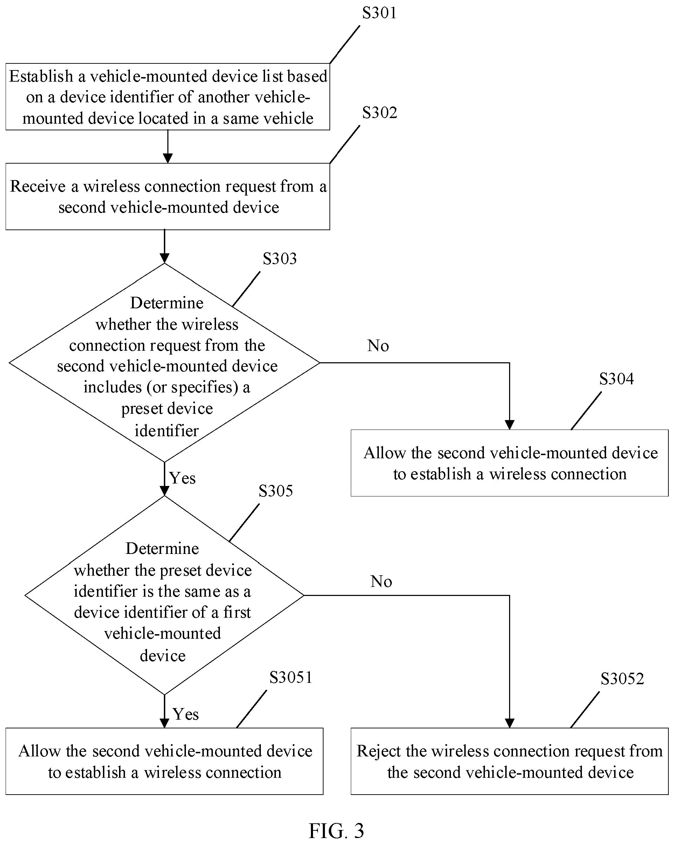

For example, FIG. 3 is a schematic flowchart in which a first vehicle-mounted device processes a wireless connection request according to an embodiment of this application.

As shown in FIG. 3, for a procedure in which the first vehicle-mounted device processes the wireless connection request, refer to the following steps.

S301: Establish a vehicle-mounted device list based on a device identifier of another vehicle-mounted device located in a same vehicle.

S302: Receive a wireless connection request from a second vehicle-mounted device.

S303: Determine whether the wireless connection request from the second vehicle-mounted device includes (or specifies) a preset device identifier.

If a determining result is no, S304 is performed to allow the second vehicle-mounted device to establish a wireless connection.

If the determining result is yes, S305 is performed to determine whether the preset device identifier is the same as a device identifier of the first vehicle-mounted device.

Further, when the wireless connection request from the second vehicle-mounted device includes (or specifies) the preset device identifier, if the preset device identifier is the same as the device identifier of the first vehicle-mounted device, S3051 is performed to allow the second vehicle-mounted device to establish the wireless connection; or if the preset device identifier is different from the device identifier of the first vehicle-mounted device, S3052 is performed to reject the wireless connection request from the second vehicle-mounted device.

For example, assuming that a vehicle-mounted device list established by the first vehicle-mounted device (a corresponding device identifier is set as a MAC address 1) includes a vehicle-mounted device 1 (a corresponding device identifier is set as a MAC address 2), a vehicle-mounted device 2 (a corresponding device identifier is set as a MAC address 3), and a vehicle-mounted device 3 (a corresponding device identifier is set as a MAC address 4). When the first vehicle-mounted device receives the wireless connection request from the second vehicle-mounted device, if the wireless connection request does not specify the preset device identifier (namely, a MAC address of a device to which the second vehicle-mounted device wants to establish a wireless connection), it may be considered that the second vehicle-mounted device is a non-vehicle-mounted device (for example, a mobile terminal of a user), and therefore the first vehicle-mounted device is allowed to establish a wireless connection; or if the wireless connection request specifies the preset device identifier, it is considered that the second vehicle-mounted device is a vehicle-mounted device, and therefore, it needs to be determined whether the preset device identifier is the same as an identifier of a vehicle-mounted device (namely, the MAC address 1). When the preset device identifier is the same as the identifier of the vehicle-mounted device, the second vehicle-mounted device is allowed to establish the wireless connection; or when the preset device identifier is different from the identifier of the vehicle-mounted device, the wireless connection request from the second vehicle-mounted device is rejected.

It should be noted that, in this embodiment of this application, before the first vehicle-mounted device determines whether the wireless connection request from the second vehicle-mounted device includes the preset device identifier, the first vehicle-mounted device needs to determine whether a target user name, a target password, and a target encryption manner in the wireless connection request from the second vehicle-mounted device are the same as a user name, a password, and an encryption manner of a wireless communication hotspot service provided by the first vehicle-mounted device. If the target user name, the target password, and the target encryption manner in the wireless connection request from the second vehicle-mounted device are the same as the user name, the password, and the encryption manner of the wireless communication hotspot service provided by the first vehicle-mounted device, a device identifier (for example, a MAC address) may be determined. If the target user name, the target password, and the target encryption manner in the wireless connection request from the second vehicle-mounted device are different from the user name, the password, and the encryption manner of the wireless communication hotspot service provided by the first vehicle-mounted device, the wireless connection request from the second vehicle-mounted device is rejected. The target user name, the target password, and the target encryption manner in the wireless connection request from the second vehicle-mounted device are a user name, a password, and an encryption manner of a wireless communication hotspot service that the second vehicle-mounted device wants to obtain.

It can be learned that in this embodiment of this application, a hotspot device (namely, a device that provides a wireless communication hotspot service) is allowed to compare a target MAC address (namely, a MAC address of a hotspot device to which the device wants to establish a wireless connection) in a wireless connection request with a MAC address of a current hotspot device, to avoid a case in which the device is mistakenly connected to a hotspot (or another wireless communication hotspot service), thereby improving accuracy of the wireless connection, and protecting security of the user data.

In a possible implementation, the method may further include:
establishing a connected list, where the connected list may include connection information of a device that is wirelessly connected to the first vehicle-mounted device; the connection information may include a name of the device that is wirelessly connected to the first vehicle-mounted device; and the connection information may further include connection duration of the device that is wirelessly connected to the first vehicle-mounted device.

In another possible implementation, the hiding information about the second vehicle-mounted device may include:
hiding the information about the second vehicle-mounted device when the second information matches third information, where
the third information is information sent by the second vehicle-mounted device and received by the first vehicle-mounted device through the wireless connection, and the third information may include the device identifier of the second vehicle-mounted device.

For example, when a device identifier (for example, a MAC address) of the second vehicle-mounted device included in the wireless connection request matches a MAC address in a vehicle-mounted device list, connection information of the second vehicle-mounted device is removed from the connected list, and an updated connected list is presented on a display module of a head unit.

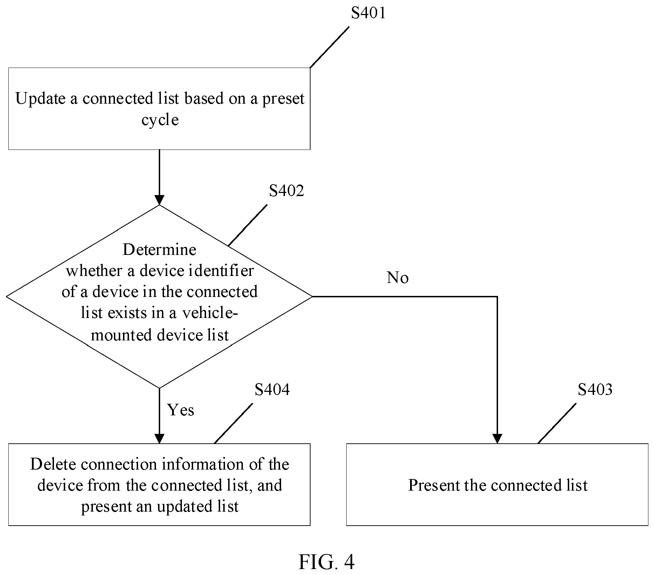

For example, FIG. 4 is a schematic flowchart of updating a connected list according to an embodiment of this application.

As shown in FIG. 4, for a procedure in which a first vehicle-mounted device updates a connected list, refer to the following steps.

S401: Update the connected list based on a preset cycle.

For example, the first vehicle-mounted device may refresh the connected list once based on the preset cycle (for example, 1 second), and store, to the connected list, connection information of a device that establishes a wireless connection to the first vehicle-mounted device in a previous cycle (for example, 1 second). Possibly, in response to a device successfully establishing a wireless connection to the first vehicle-mounted device, the first vehicle-mounted device may alternatively store connection information of the device to the connected list. Further, the first vehicle-mounted device may update connection duration of the device based on a preset cycle (for example, 30 milliseconds).

Similarly, the first vehicle-mounted device may refresh the connected list once based on the preset cycle (for example, 1 second), and delete the connection information of the device that establishes the wireless connection to the first vehicle-mounted device in the previous cycle (for example, 1 second) from the connected list. Possibly, in response to a device disconnecting a wireless connection to the first vehicle-mounted device, the first vehicle-mounted device may alternatively delete connection information of the device from the connected list.

S402: Determine whether a device identifier of a device in the connected list exists in a vehicle-mounted device list.

If a determining result is no, S403 is performed to present the connected list.

If the determining result is yes, S404 is performed to delete connection information of the device from the connected list, and present an updated list.

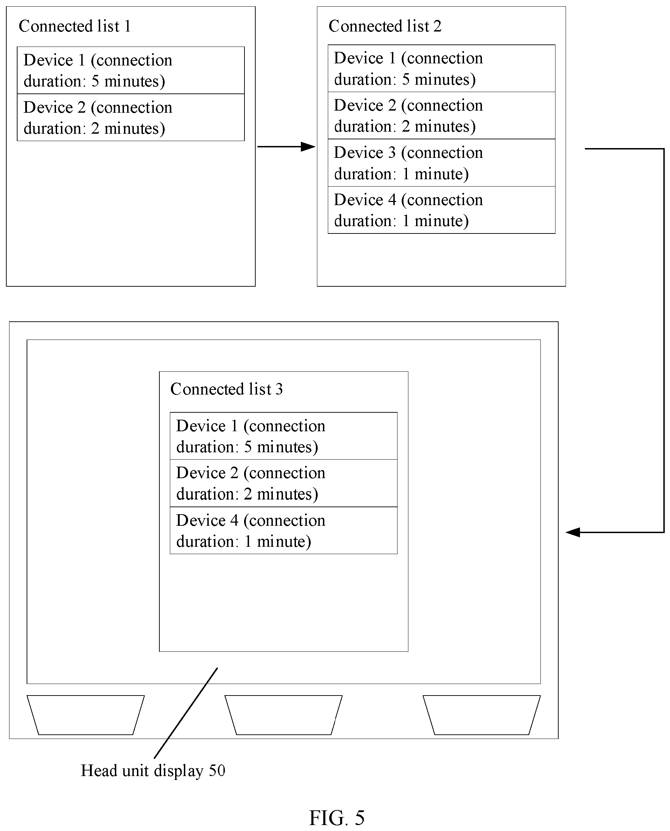

For example, FIG. 5 is a diagram of another scenario of updating a connected list according to an embodiment of this application.

As shown in FIG. 5, it is assumed that there is a connected list 1, a device 1 (a wireless connection request includes a preset device identifier, and the preset device identifier is the same as a device identifier of a first vehicle-mounted device, but a device identifier of the device 1 is not in a vehicle-mounted device list) and a device 2 (a wireless connection request does not include a preset device identifier) exist in the connected list 1, connection duration of the device 1 is 5 minutes, and connection duration of the device 2 is 2 minutes. If a device 3 (a wireless connection request includes a preset device identifier, the preset device identifier is the same as the device identifier of the first vehicle-mounted device, and a device identifier of the device 3 is in the vehicle-mounted device list) and a device 4 (a wireless connection request does not include a preset device identifier) currently establishes wireless connections to the first vehicle-mounted device, a connected list 2 is generated. Because the device 3 belongs to another vehicle-mounted device (namely, a vehicle-mounted device located in a same vehicle as the first vehicle-mounted device), connection information of the device 3 is deleted before a display list is presented to a user, to obtain an updated connected list 3, and finally the connected list 3 is presented on a head unit display 50 of a vehicle. It should be noted that, in this embodiment of this application, the foregoing example of presenting the connected list on the head unit display 50 is merely intended to describe the solution of this application in more detail, and should not be construed as a limitation. The connected list may alternatively be presented on another display of the vehicle and/or a mobile terminal with a display function of the user. This is not limited herein. A specific presentation manner of the connected list is set by a skilled person based on an actual situation.

It can be learned that in this embodiment of this application, connection information of an ad hoc networking device (namely, another vehicle-mounted device that is located in a same vehicle as a hotspot device, and the hotspot device is a device that provides a wireless communication hotspot service) in the vehicle is deleted, and a connected list is maintained. This helps improve user experience, prevents the user from mistakenly removing the ad hoc networking device in the vehicle from a network, and helps ensure that the vehicle can provide a related vehicle-mounted service normally.

In another possible implementation, the method may include:
maintaining a wireless connection between the first vehicle-mounted device and a second vehicle-mounted device in response to a request to disable a hotspot service for the first vehicle-mounted device.

Further, the first vehicle-mounted device disconnects a wireless connection from a non-vehicle-mounted device (for example, the mobile device described above) in the connected list, and deletes connection information of the non-vehicle-mounted device in the connected list.

Possibly, the first vehicle-mounted device may further disconnect wireless connections from all devices in the connected list, and remove connection information of all the devices in the connected list.

In another possible implementation, the method may include:
The first vehicle-mounted device hides a service set identifier SSID broadcast of the first vehicle-mounted device.

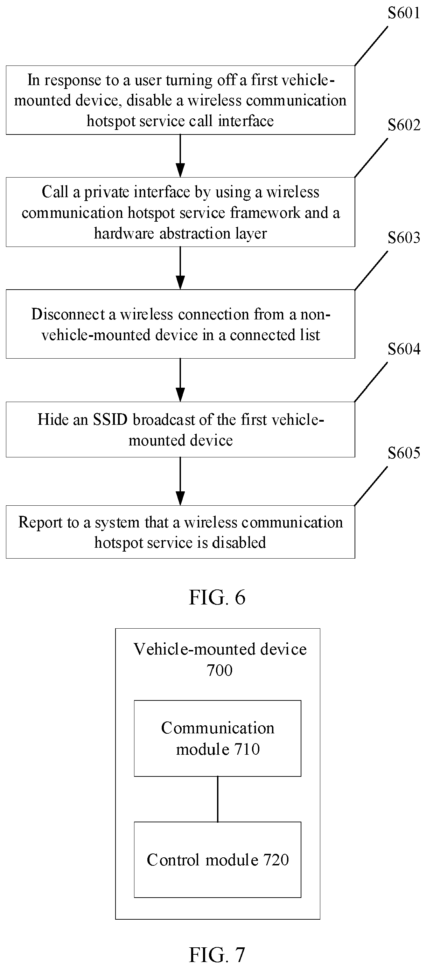

For example, FIG. 6 is a schematic flowchart in which a first vehicle-mounted device disables a wireless communication hotspot service according to an embodiment of this application.

As shown in FIG. 6, for a procedure in which the first vehicle-mounted device disables the wireless communication hotspot service, refer to the following steps.

S601: In response to a user turning off the first vehicle-mounted device, disable a wireless communication hotspot service call interface.

Possibly, the user may directly operate, on the first vehicle-mounted device, to disable the wireless communication hotspot service without turning off the first vehicle-mounted device.

S602: Call a private interface by using a wireless communication hotspot service framework and a hardware abstraction layer.

The wireless communication hotspot service framework may be a Wi-Fi framework. The hardware abstraction layer may be understood as a hardware abstraction layer, HAL for short.

S603: Disconnect a wireless connection from a non-vehicle-mounted device in a connected list.

S604: Hide an SSID broadcast of the first vehicle-mounted device.

S605: Report to a system that the wireless communication hotspot service is disabled.

It can be learned that in this embodiment of this application, a complete result for disabling the wireless communication hotspot service is presented to the user without affecting a normal wireless connection between an ad hoc networking device (namely, another vehicle-mounted device that is located in a same vehicle as a hotspot device, and the hotspot device is a device that provides a wireless communication hotspot service) in the vehicle and the hotspot device. This helps ensure integrity of vehicle services or functions without affecting user experience.

The following describes an apparatus involved in this embodiment of this application with reference to accompanying drawings.

FIG. 7 is a vehicle-mounted device 700 according to an embodiment of this application. The vehicle-mounted device 700 may include a communication module 710 and a control module 720.

The communication module 710 may be configured to receive a wireless connection request from a second vehicle-mounted device.

The control module 720 may be configured to allow, when the wireless connection request includes a preset device identifier and the preset device identifier matches a device identifier of the vehicle-mounted device, the second vehicle-mounted device to establish a wireless connection.

In a possible implementation, the vehicle-mounted device 700 may alternatively include:
the control module 720 that may be further configured to establish a wired connection to the second vehicle-mounted device; and
the communication module 710 that may be further configured to send first information to the second vehicle-mounted device, where the first information may be used by the second vehicle-mounted device to establish the wireless connection to the first vehicle-mounted device based on the first information.

In another possible implementation, the first information may include a user name and a password of the wireless communication hotspot service, and the device identifier of the first vehicle-mounted device.

In a possible implementation, the vehicle-mounted device 700 may further include:
the control module 720 that may be further configured to: when the wireless connection request does not include the preset device identifier, and/or the preset device identifier does not match the device identifier of the first vehicle-mounted device, the wireless connection request from the second vehicle-mounted device.

In a possible implementation, the vehicle-mounted device 700 may further include:
the communication module 710 that may be further configured to receive second information sent by the second vehicle-mounted device, where the second information may include a device identifier of the second vehicle-mounted device.

In a possible implementation, the vehicle-mounted device 700 may further include:
the control module 720 that may be further configured to hide information about the second vehicle-mounted device when displaying a device connection list of the hotspot service.

In a possible implementation, the vehicle-mounted device 700 may further include:
the control module 720 that may be further configured to hide the information about the second vehicle-mounted device when the second information matches third information, where
the third information is information sent by the second vehicle-mounted device and received by the first vehicle-mounted device through the wireless connection, and the third information may include the device identifier of the second vehicle-mounted device.

In a possible implementation, the vehicle-mounted device 700 may further include:
the control module 720 that may be further configured to maintain the wireless connection between the first vehicle-mounted device and the second vehicle-mounted device in response to a request to disable a hotspot service for the first vehicle-mounted device.

In a possible implementation, the vehicle-mounted device 700 may further include:
the control module 720 that may be further configured to hide an SSID broadcast of the first vehicle-mounted device.

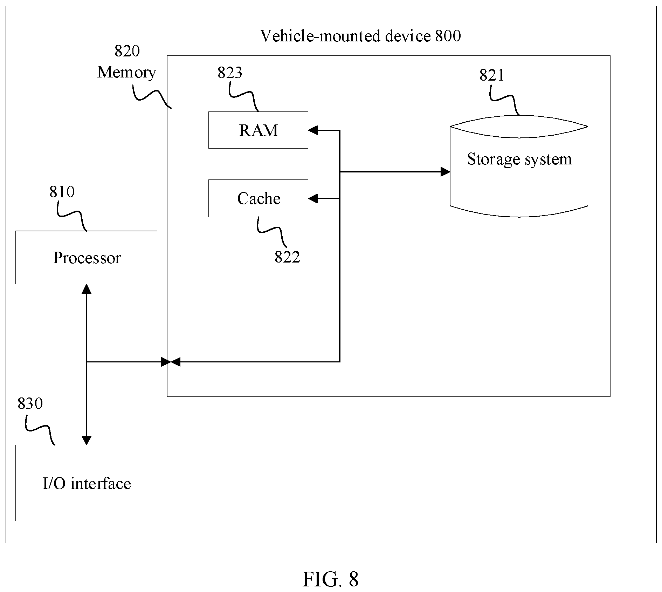

FIG. 8 is a composition diagram of another vehicle-mounted device 800 according to an embodiment of this application. The vehicle-mounted device 800 may include:
a processor 810, a memory 820, and an I/O interface 830. The processor 810, the memory 820, and the I/O interface 830 may be communicatively connected. The memory 820 is configured to store instructions, and the processor 810 is configured to execute the instructions stored in the memory 820, to implement the method steps corresponding to FIG. 1, FIG. 3, FIG. 4, and FIG. 6.

The processor 810 is configured to execute the instructions stored in the memory 820, to control the I/O interface 830 to receive and send a signal, and complete the steps in the foregoing methods. The memory 820 may be integrated in the processor 810, or the memory 820 and the processor 810 may be separately disposed.

The memory 820 may further include a storage system 821, a cache 822, and a RAM 823. The cache 822 is a level 1 memory located between the RAM 823 and a CPU, including a static random-access memory (SRAM). The cache 822 has a small capacity, and a speed is much higher than a main memory and close to a speed of the CPU. The RAM 823 is an internal memory that directly exchanges data with the CPU, and can read and write data at a high speed at any time (except in a refresh cycle), and is usually used as a temporary data storage medium of an operating system or another running program. The storage system 821, the cache 822, and the RAM 823 are combined to implement functions of the memory 820.

In an implementation, a function of the I/O interface 830 may be implemented through a transceiver circuit or a dedicated transceiver chip. The processor 810 may be implemented by a dedicated processing chip, a processing circuit, a processor, or a general-purpose chip.

In another implementation, the apparatus provided in this embodiment of this application may be implemented by using a general-purpose computer. That is, program code for implementing functions of the processor 810 and the I/O interface 830 is stored in the memory 820, and a general-purpose processor implements the functions of the processor 810 and the I/O interface 830 by executing the code in the memory 820.

For a concept, an explanation, a detailed description, and other steps with respect to the apparatus that are related to the technical solutions provided in embodiments of this application, refer to descriptions of the content in the foregoing methods or the method steps performed by the apparatus in other embodiments. Details are not described herein.

In another implementation of this embodiment, a computer-readable storage medium is provided. The computer-readable storage medium stores instructions. When the instructions are executed, the method in the foregoing method embodiments is performed.

In another implementation of this embodiment, a computer program product including instructions is provided. When the instructions are executed, the method in the foregoing method embodiments is performed.

A person skilled in the art may understand that, for ease of description, FIG. 8 shows only one memory and one processor. In an actual terminal or server, there may be a plurality of processors and memories. The memory may also be referred to as a storage medium, a storage device, or the like. This is not limited in embodiments of this application.

It should be understood that, in this embodiment of this application, the processor may be a central processing unit (Central Processing Unit, CPU for short), or the processor may be another general-purpose processor, a digital signal processor (Digital Signal Processor, DSP for short), an application-specific integrated circuit (Application-Specific Integrated Circuit, ASIC for short), a field-programmable gate array (Field-Programmable Gate Array, FPGA for short), another programmable logic device, a discrete gate or transistor logic device, a discrete hardware component, or the like.

It may be understood that the memory mentioned in embodiments of this application may be a volatile memory or a non-volatile memory, or may include a volatile memory and a non-volatile memory. The non-volatile memory may be a read-only memory (Read-Only Memory, ROM for short), a programmable read-only memory (Programmable ROM, PROM for short), or an erasable programmable read-only memory (Erasable PROM, EPROM for short), an electrically erasable programmable read-only memory (Electrically EPROM, EEPROM for short), or a flash memory. The volatile memory may be a random access memory (Random Access Memory, RAM for short), and is used as an external cache. Through an example but not a limitative description, RAMs in many forms are available, such as a static random access memory (Static RAM, SRAM for short), a dynamic random access memory (Dynamic RAM, DRAM for short), a synchronous dynamic random access memory (Synchronous DRAM, SDRAM for short), a double data rate synchronous dynamic random access memory (Double Data Rate SDRAM, DDR SDRAM for short), an enhanced synchronous dynamic random access memory (Enhanced SDRAM, ESDRAM for short), a synchlink dynamic random access memory (Synchlink DRAM, SLDRAM for short), and a direct rambus random access memory (Direct Rambus RAM, DR RAM for short).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but is not limited to these memories and any memory of another appropriate type.

In addition to a data bus, the bus may further include a power bus, a control bus, a status signal bus, and the like. However, for clear description, various types of buses in the figure are denoted as the bus.

It should be further understood that, "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In an implementation process, steps in the foregoing methods may be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that the illustrative logical blocks (illustrative logical blocks, ILB for short) and the steps described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, the functional units in embodiments of this application may be integrated into one processing unit, or each unit may exist alone physically, or two or more units may be integrated into one unit.

All or some of the embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

An embodiment of this application further provides a computer-readable storage medium. The computer-readable storage medium stores a computer program, and the computer program is executed by a processor to implement some or all of the steps of any communication connection method described in the foregoing method embodiments.

An embodiment of this application further provides a computer program product. The computer program product includes a non-transitory computer-readable storage medium storing a computer program, and the computer program is operable to enable a computer to perform some or all of the steps of any communication connection method described in the foregoing method embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication connection method, performed by a first vehicle-mounted device, wherein the first vehicle-mounted device is a vehicle-mounted device that provides a wireless communication hotspot service, and the method comprises:
receiving, by the first vehicle-mounted device, a wireless connection request from a second vehicle-mounted device; and
allowing, by the first vehicle-mounted device when the wireless connection request comprises a preset device identifier and the preset device identifier matches a device identifier of the first vehicle-mounted device, the second vehicle-mounted device to establish a wireless connection.

2. The method according to claim 1, wherein before the receiving, by the first vehicle-mounted device, a wireless connection request from a second vehicle-mounted device, the method further comprises:
establishing, by the first vehicle-mounted device, a wired connection to the second vehicle-mounted device; and
sending, by the first vehicle-mounted device, first information to the second vehicle-mounted device through the wired connection, wherein the first information is used by the second vehicle-mounted device to establish the wireless connection to the first vehicle-mounted device based on the first information.

3. The method according to claim 2, wherein the first information comprises a user name and a password of the wireless communication hotspot service, and the device identifier of the first vehicle-mounted device.

4. The method according to any one of claims 1 to 3, wherein the method further comprises:
when the wireless connection request does not comprise the preset device identifier, and/or the preset device identifier does not match the device identifier of the first vehicle-mounted device, rejecting, by the first vehicle-mounted device, the wireless connection request from the second vehicle-mounted device.

5. The method according to any one of claims 2 to 4, wherein the method further comprises:
receiving, by the first vehicle-mounted device through the wired connection, second information sent by the second vehicle-mounted device, wherein the second information comprises a device identifier of the second vehicle-mounted device.

6. The method according to any one of claims 1 to 5, wherein after the allowing, by the first vehicle-mounted device when the wireless connection request comprises a preset device identifier and the preset device identifier matches a device identifier of the first vehicle-mounted device, the second vehicle-mounted device to establish a wireless connection, the method further comprises:
hiding, by the first vehicle-mounted device, information about the second vehicle-mounted device when displaying a device connection list of the hotspot service.

7. The method according to claim 6, wherein the hiding information about the second vehicle-mounted device comprises:
hiding the information about the second vehicle-mounted device when the second information matches third information, wherein
the third information is information sent by the second vehicle-mounted device and received by the first vehicle-mounted device through the wireless connection, and the third information comprises the device identifier of the second vehicle-mounted device.

8. The method according to any one of claims 1 to 7, wherein the method further comprises:
maintaining the wireless connection between the first vehicle-mounted device and the second vehicle-mounted device in response to a request to disable the hotspot service for the first vehicle-mounted device.

9. The method according to any one of claims 1 to 8, wherein the method further comprises:
hiding, by the first vehicle-mounted device, an SSID broadcast of the first vehicle-mounted device.

10. A communication connection method, applied to a second vehicle-mounted device, wherein the method comprises:
sending, by the second vehicle-mounted device, a wireless connection request to a first vehicle-mounted device, wherein the first vehicle-mounted device is a vehicle-mounted device that provides a wireless communication hotspot service; and
establishing, by the second vehicle-mounted device, a wireless connection to the first vehicle-mounted device based on the wireless connection request when the wireless connection request comprises a preset device identifier and the preset device identifier matches a device identifier of the first vehicle-mounted device.

11. The method according to claim 10, wherein before the sending, by the second vehicle-mounted device, a wireless connection request to a first vehicle-mounted device, the method further comprises:
establishing, by the second vehicle-mounted device, a wired connection to the first vehicle-mounted device; and
receiving, by the second vehicle-mounted device, first information sent by the first vehicle-mounted device through the wired connection, wherein the first information is used by the second vehicle-mounted device to establish the wireless connection to the first vehicle-mounted device based on the first information.

12. The method according to claim 11, wherein the first information comprises a user name and a password of the wireless communication hotspot service, and the device identifier of the first vehicle-mounted device.

13. The method according to claim 11 or 12, wherein the method further comprises:
sending, by the second vehicle-mounted device, second information to the first vehicle-mounted device through the wired connection, wherein the second information comprises a device identifier of the second vehicle-mounted device; and
sending, by the second vehicle-mounted device, third information to the first vehicle-mounted device through the wireless connection, wherein the third information comprises the device identifier of the second vehicle-mounted device, so that when the first vehicle-mounted device displays a device connection list of the wireless communication hotspot service based on the second information and the third information, the first vehicle-mounted device hides or displays information about the second vehicle-mounted device.

14. A vehicle-mounted device (800), comprising:
a processor (810), a memory (820), and an I/O interface (830), wherein the processor (810), the memory (820), and the I/O interface (830) are communicatively connected; the memory (820) is configured to store a set of program code; and the processor (810) is configured to invoke the program code stored in the memory (820), to perform the method according to any one of claims 1 to 9.

15. A non-volatile computer-readable storage medium, comprising:
the non-volatile computer-readable storage medium stores instructions, and when the instructions are run on a computer, the method according to any one of claims 1 to 9 is implemented.

16. A vehicle-mounted device (800), comprising:
a processor (810), a memory (820), and an I/O interface (830), wherein the processor (810), the memory (820), and the I/O interface (830) are communicatively connected; the memory (820) is configured to store a set of program code; and the processor (810) is configured to invoke the program code stored in the memory (820), to perform the method according to any one of claims 10 to 13.

17. A non-volatile computer-readable storage medium, comprising:
the non-volatile computer-readable storage medium stores instructions, and when the instructions are run on a computer, the method according to any one of claims 10 to 13 is implemented.

18. A vehicle, wherein the vehicle comprises the vehicle-mounted device or the non-volatile computer-readable storage medium according to claim 14 or 15, and the vehicle-mounted device or the non-volatile computer-readable storage medium according to claim 16 or 17.
